# EUROPEAN PATENT SPECIFICATION

(11) **EP 3 938 082 B1**
(45) Date of publication and mention of the grant of the patent: **08.07.2026**
(21) Application number: 20709597.7
(22) Date of filing: 12.03.2020
(51) Int. Cl.: B01D 53/18, B01D 53/50, B01D 53/78

(54) **METHOD AND APPARATUS FOR WET CLEANING EXHAUST FUMES FROM AN ENGINE OF A MARINE VESSEL**
VERFAHREN UND VORRICHTUNG ZUR NASSREINIGUNG VON ABGASEN AUS EINEM SCHIFFSMOTOR
PROCÉDÉ ET APPAREIL POUR LE NETTOYAGE PAR VOIE HUMIDE DE FUMÉES D'ÉCHAPPEMENT PROVENANT D'UN MOTEUR D'UN NAVIRE

(30) Priority: 13.03.2019 FR 1902570
(43) Date of publication of application: 19.01.2022
(73) Proprietor: LAB, 69007 Lyon (FR)
(72) Inventor: SIRET, Bernard, 69200 VENISSIEUX (FR); VUONG, François, 83400 HYERES (FR)
(74) Representative: Lavoix
(86) International application number: PCT/EP2020/056631
(87) International publication number: WO 2020/182937

(56) References cited:
- CN-A- 105 817 121
- CN-A- 108 905 580
- US-A- 6 029 956
- US-A1- 2009 151 563

## Description

The present invention relates to a method and apparatus for wet cleaning exhaust fumes from an engine of a marine vessel.

In maritime transport, in particular for freight or passengers, the propulsion engines of marine vessels and ships are a significant source of pollution, in particular a source of sulfur dioxide (SO₂) that is the main source of acid rain. Emissions of sulfur dioxide are related to the presence of sulfur in the fuels used by the diesel engines ensuring the propulsion of marine vessels. The International Maritime Organization (IMO) is at the source of regulations seeking to limit the sulfur dioxide emissions of the fumes discharged into the atmosphere by ships: currently, this limitation is equivalent to limiting the sulfur content of fuels to 0.5% by weight, this limitation having in the future to go to the equivalent of 0.1% sulfur by weight. In order to respect such limitations, two main solutions can be considered: either a fuel with a very low sulfur content is used, or a fuel with more sulfur is used and treatment systems are implemented to eliminate the sulfur dioxide resulting from the combustion of the sulfur in the marine engines.

Alternatives exist, like that based on the use of engines whose fuel is liquefied gas or methanol. However, these alternatives include drawbacks, such as storage and safety, that are particularly restrictive for the use of liquefied gas. In practice, it is more profitable for owners to equip ships whose propulsion engines use diesel, with treatment systems for the exhaust fumes emitted by these engines, rather than replacing these engines with motor means using a less polluting fuel.

The most common technology for such fume treatment systems is wet cleaning and consists of using a scrubber, which is embedded on the ship and in which an ad hoc cleaning liquid is dispersed, usually with a base of seawater, whose natural alkalinity is used to neutralize the sulfur dioxide. Subsequently, in the rest of the present document, this scrubbing liquid is called "water", with the understanding that this term "water" corresponds to the aqueous liquor, in the liquid state, used to purify fumes in a scrubber, this water typically being seawater, to which a neutralizing reagent may have been added such as sodium hydroxide (NaOH), magnesia (MgO, Mg(OH)₂) or lime (Ca(OH)₂), and which may also contain salts, resulting from the purification of the fumes, and other solids. This water is sprayed at the top of the inside of the scrubber, while the exhaust fumes to be cleaned enter the bottom of the inside of the scrubber: the sprayed water falls in the scrubber in the form of a rain that encounters the rising fumes, which, in contact with the water, are cleaned by transfer of the pollutants, in particular of the sulfur dioxide, that they contain. This type of wet cleaning apparatus has the advantage of being simple to operate, and the pressure drops generated remain low.

However, these rainwater scrubbers can experience a spatial issue, since they require a contact time on the order of several seconds to ensure a sufficient transfer between the sprayed drops and the fumes to be cleaned. Once significant allowances, in particular a capture of sulfur dioxide, are desired, the scrubber must have a high height, for example on the order of ten meters. Yet the profitability of a ship is related to the useful space that it has, such that such dimensions for the scrubber can be detrimental.

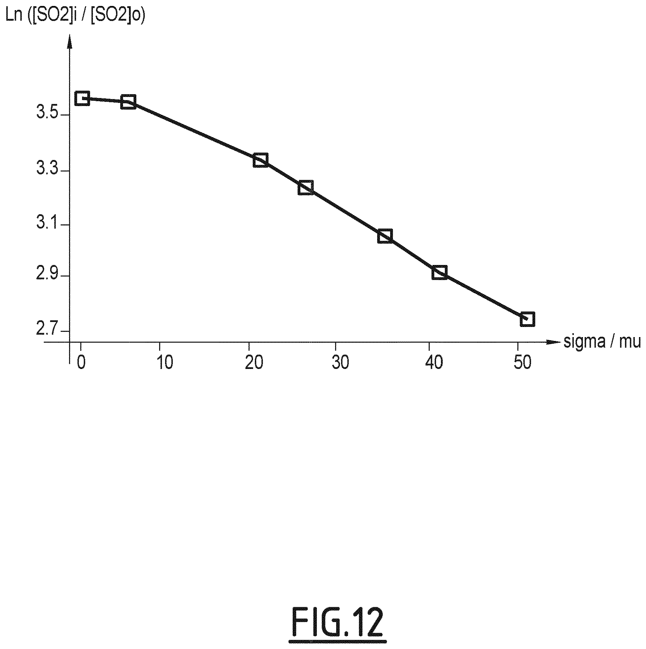

Another issue is related to the flow of the fumes inside the scrubber, since a heterogeneity of this flow often leads to weaker scrubbing performance. Furthermore, the indirect consequence of a large height for the scrubber is the tendency toward greater inhomogeneities in the velocity profiles of the fumes rising inside the scrubber, in particular when the fume flow rates to be treated are substantial. This issue is illustrated by figure 12, which shows the effect of a poor distribution of the fumes on the scrubbing performance: in this figure 12, the scrubbing performance, expressed as Ln([SO2]i/[SO2]o), where [SO2]i designates the sulfur dioxide concentration in the fumes entering the scrubber and [SO2]o designates the sulfur dioxide concentration in the fumes leaving the scrubber, are evaluated as a function of a maldistribution rate of the fumes flowing in the scrubber, this type of maldistribution being expressed as a sigma/mu ratio, sigma designating the standard deviation of the vertical component of the velocity of the fumes in a median horizontal plane of the scrubber and mu designating the average of this same component. Figure 12 illustrates that a single homogeneous aeraulic profile of the fumes in the scrubber makes it possible to obtain good scrubbing performances.

Solutions have been proposed to these issues relative to marine scrubbers. It is thus technically possible to use internal arrangements with perforated plates or with bubble caps, but the pressure drop induced by these arrangements becomes too high. Likewise, the inside of the scrubber can be provided with structured or random packing, but compared to a practically empty scrubber, that is to say, devoid of such liners, the pressure drop is substantial and scaling, or even blockage, can occur. US 2009/151563 provides one example of this.

CN-105,817,121-A, which is not specifically related to the field of marine scrubbers, discloses a wet cleaning method and apparatus for fumes. The fumes to be cleaned enter the lower part of a scrubber and rise inside this scrubber while water is spread inside the scrubber and falls therein in the form of a rain, countercurrent to the fumes. A plate is arranged inside the scrubber, while separating the latter into two separate compartments, namely a lower compartment, in which the fumes enter the scrubber, and an upper compartment in which the rain is spread. This plate occupies the entire cross-section of the scrubber and is inclined, such that the water from the rain, once it has fallen on the upper face of the plate, streams to a lower end edge of the plate where all of the water is collected in a reactor outside the scrubber. In this reactor, the sulfites from the water are oxidized into sulfate, before the water thus acidified is returned into the bottom of the scrubber in order to supply the spread of the rain. The aforementioned plate is provided with perforations connecting the upper and lower faces of the plate. Each perforation is fitted with a tubular duct, which borders the upper mouth of the perforation and which rises vertically from the upper face of the plate, while being welded to the latter. These tubular ducts inwardly channel the flow of fumes through the plate, while forming obstacles that prevent the fumes from contacting the water on the upper face of the plate. CN 108 905 580 A, which is also not specifically related to the field of marine scrubbers, describes another type of wet scrubber for fumes.

The aim of the present invention is to propose developments for a marine scrubber with rainwater, which, while being simple and economical, make it possible to improve the cleaning performance of this scrubber.

To that end, the invention relates to a method for wet cleaning of exhaust fumes of an engine of a marine vessel, this method being as defined in claim 9.

The invention also relates to an apparatus for wet cleaning of exhaust fumes from an engine of a marine vessel, this apparatus being as defined in claim 1. This apparatus is able to carry out the method as defined above.

Owing to the invention, the body of the distributing device performs a dual function, namely on the one hand, to homogenize the velocity profile of the fumes downstream from this distributing device, in other words, above the body, and on the other hand, to contribute to scrubbing the fumes passing through this body. Indeed, the homogenization effect of the velocity profile of the fumes results from the pressure drop induced by the body: the fumes rising inside the scrubber from the duct having supplied them into the lower part of the scrubber reach the lower face of the body at which they are forced to spread to continue their upward progression through the body, via the perforations of the latter, which is the mark of a good cleaning of the fumes downstream from the body by contact with the spray spread above. Due to the sizing, both individual and collective, of these perforations, the value of this pressure drop is controlled, for example being between 50 Pa and 800 Pa, this value being much smaller than the pressure drop values caused by arrangements of the plate or liner type. The contribution effect to the scrubbing of the fumes results from the streaming, on the upper face of the body, of the water falling in a rain on this body from an ad hoc spread device, arranged in the upper part of the scrubber: this upper face of the body is not horizontal, but is inclined such that the water streams there by gravity, while forming a water film covering the upper face of the body, partially including the upper mouth of the perforations of the body. The invention provides that the perforations of the body are sized, both individually and collectively, such that the velocity of the fumes in the perforations is between 5 and 25 m/s, preferably between 10 and 15 m/s: as a result, the water of the film streaming over the upper surface of the body cannot flow downward through the perforations, except for a marginal quantity of this water that may form a limited dripping, but is, on the contrary, projected partially upward in the form of jets generated by the meeting between the flow of the fumes in the perforations and the aforementioned water film. An increased gas-liquid transfer is done in these jets, which amounts to saying that the scrubbing of the fumes is reinforced there. Thus, the invention can be understood as using the provided body to homogenize the velocity profile of the fumes passing through this body, also as contributing to the gas-liquid transfer, in particular to capture the sulfur dioxide present in the fumes. The apparatus according to the invention thus has remarkable cleaning performances, in that the effectiveness of the scrubbing is improved, and as a result, the height of the scrubber can be controlled, or even reduced.

Additional advantageous features of the method and facility according to the invention are specified in the dependent claims, having noted that the features set out for the apparatus are applicable to the method, and vice versa.

The invention will be better understood upon reading the following description, provided solely as an example and done in reference to the drawings, in which:
- [Fig 1] figure 1 is a schematic view of a cleaning apparatus according to the invention, and implementing a cleaning method according to the invention;
- [Fig 2] figure 2 is a schematic sectional view along line II-II of figure 1;
- [Fig 3] figure 3 is a view similar to figure 2, illustrating a variant of the apparatus;
- [Fig 4] figure 4 is a view similar to figure 2, illustrating another variant of the apparatus;
- [Fig 5] figure 5 is a view similar to figure 1, partially illustrating another variant of the apparatus;
- [Fig 6] figure 6 is a schematic sectional view along line VI-VI of figure 5;
- [Fig 7] figure 7 is a view similar to figure 1, partially illustrating still another variant of the apparatus;
- [Fig 8] figure 8 is a schematic sectional view along line VIII-VIII of figure 7;
- [Fig 9] figure 9 is a view similar to figure 1, partially illustrating still another variant of the apparatus;
- [Fig 10] figure 10 is a view similar to figure 9, illustrating still another variant of the apparatus;
- [Fig 11] figure 11 is a view similar to figure 1, partially illustrating still another variant of the apparatus; and
- [Fig 12] figure 12 is a graph illustrating scrubbing performances, which has already been discussed above.

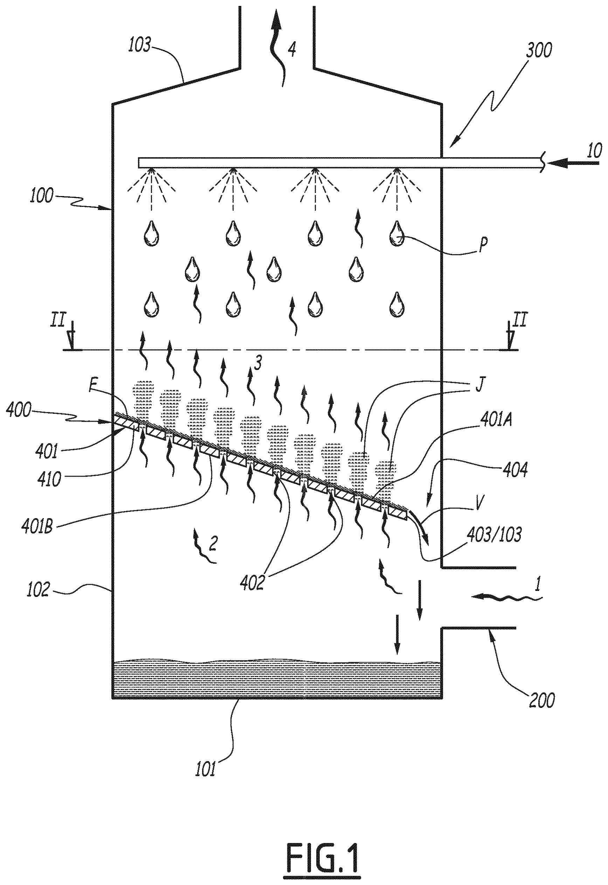

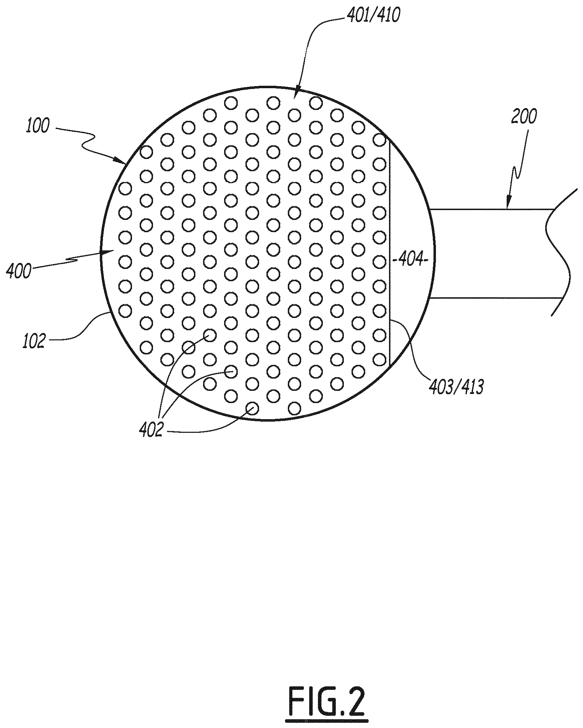

Figures 1 and 2 show an apparatus making it possible to clean, in particular to desulfurize, exhaust fumes 1 emitted by a diesel engine propelling a sea ship on board which said facility is located. The fumes 1 contain various pollutants, including sulfur dioxide (SO₂).

In the facility of figures 1 and 2, the fumes 1, which come from the exhaust outlet of the aforementioned engine and which may have been subject to prior denitrification and/or dust removal, are introduced into a scrubber 100 through a duct 200.

As shown schematically in figures 1 and 2, the scrubber 100 globally assumes the form of a tower, which, in operation, extends vertically lengthwise. At its lower part, the scrubber 100 has a bottom 101 from which a side wall 102 of the scrubber rises, ending with an apex 103. The side wall 102 of the scrubber 100 defines a central geometric axis and delimits the cross-section of the scrubber 100: when the scrubber 100 is in operation, the aforementioned geometric axis extends vertically and the aforementioned cross-section is horizontal. As clearly shown in figure 2, in the embodiment of figures 1 and 2, the cross-section of the scrubber 100 is circular, but this geometry is not limiting with respect to the invention, as illustrated hereinafter. As an example, the side wall 102 has an inner diameter of between 2 and 8 m.

As clearly shown in figure 1, the duct 200 opens laterally in the scrubber 100, at the lower part of the latter, in other words slightly above the bottom 101 of the scrubber 100. The mouth of the duct 200 in the scrubber 100 is thus located much closer to vertically at the bottom 101 than the apex 103 of the scrubber 100 and is delimited through the side wall 102 while occupying only a limited peripheral portion of the scrubber 100, as clearly visible in figure 2.

In operation, the fumes 1, provided through the duct 200 at the lower part of the scrubber 100, flow upward inside the scrubber 100, from the bottom 101 of the latter to its apex 103.

As shown schematically in figure 1, the scrubber 100 is inwardly provided with a liquid spreading device 300, provided at the top of the scrubber, while in particular being located, at least in part, closer to vertically at the apex 103 than the bottom 101. This liquid spreading device 300 is provided to be supplied with water 10 and is designed to spread, for example by spraying, this water inside the scrubber 100 in the form of a rain P, that is to say, in the form of drops falling downward in the scrubber 100.

The liquid spreading device 300 uses a technology known in itself, which will not be described in more detail here. Thus, the embodiment of the liquid spreading device 300 is not limiting with respect to the invention inasmuch as the rain P that this device produces inside the scrubber 100 covers substantially the entire cross-section of this scrubber below the liquid spreading device 300.

As shown schematically in figures 1 and 2, the scrubber 100 is also inwardly provided with a distributing device 400 that is located vertically between the mouth of the duct 200 and the liquid spreading device 300. The distributing device 400 is therefore housed in the free volume of the scrubber 100, delimited between the mouth of the duct 200 and the liquid spreading device 300, having noted that the distributing device 400 occupies a very small part of this free volume, the rest of the latter being empty, or more generally, essentially empty in that it is devoid of a liner or a similar inner structure, but without excluding the presence of periodic inner developments that would not extend substantially through the scrubber.

The distributing device 400 is designed to distribute, substantially homogeneously over the cross-section of the scrubber 100, the fumes flowing upward in the scrubber. To that end, the distributing device 400 includes a body 401 that is arranged through the upward flow of the fumes inside the scrubber 100. More specifically, the body 401 is provided with an upper face 401A, on which the rain P falls, and a lower face 401B that is reached by the fumes, referenced 2 in figure 1, rising in the scrubber 100 from the duct 200. It will be understood that the fumes 2 are made up of fumes 1 flowing in the duct 2, after these fumes 1 have entered the scrubber 100 and once these fumes are found upstream from the body 101 inside the scrubber 100, that is to say, between the mouth of the duct 200 and the lower face 401B of the body 401. Likewise, it will be understood that, in as much as, outside the distributing device 400, the inner volume of the scrubber 100 is essentially empty, the water reaching the upper face 401A of the body 401 comes directly and exclusively from the rain P sprayed by the liquid spreading device 300. Additionally, the body 401 is provided with perforations 402 that connect the upper face 401A and the lower face 401B of the body 401 to one another: these perforations 402 allow the fumes 2, that is to say, the fumes flowing upward in the scrubber 100 from the mouth of the duct 200 to the lower face 401B of the body 401, to pass through this body 401 in order to reach the upper face 401A, from which the fumes, referenced 3, continue their upward flow toward the liquid spreading device 300. Here again, it will be understood that the fumes 3 are made up of fumes 2 after these fumes have passed through the body 401 via the perforations 402 of the latter, these fumes 3 thus being found downstream from the body 101 inside the scrubber 100, that is to say, between the upper face 401A of the body 401 and the liquid spreading device 300. The rain P flows countercurrent to the fumes 3 rising inside the scrubber 100, such that, in contact with the water making up the rain P, these fumes 3 are cleaned by transfer in this water of the pollutants that these fumes contain, in particular the sulfur dioxide that they contain. The fumes thus cleaned, referenced 4, are discharged from the scrubber 100, through the apex 103 of the scrubber.

The body 401 of the distributing device 400 causes a pressure drop for the fumes flowing in the scrubber. This pressure drop, which can be between 50 Pa and 800 Pa, preferably between 100 Pa and 400 Pa, ensures a homogenization of the velocity profile of the fumes immediately downstream from the body 401, in other words, above this body 401 inside the scrubber 100. It should be noted that without this pressure drop, the aeraulic maldistribution of the fumes 2, in particular resulting from the intake by the duct 200 of the fumes 1 laterally with respect to the scrubber 100, would be found over the entire height of the scrubber 100, while even tending to worsen as the fumes progress to the liquid spreading device 300, since the drops of the rain P tend to push back the fumes on one side of the scrubber before flowing more easily on the opposite side. Conversely, owing to the pressure drop induced by the body 401, the aeraulic maldistribution of the fumes 2 is corrected downstream from the body 401, while straightening the velocity profile of the fumes 3, such that these fumes 3 are distributed substantially homogeneously over the cross-section of the scrubber 100. The scrubbing of the fumes 3 is thus done efficiently: in particular, the cleaning rate of the fumes 3 is controlled, in that, over substantially the entire cross-section of the scrubber 100, the local ratio between the mass flux of water from the rain P and the flux of the fumes 3 is homogeneous and the contact time between the water from the rain P and the fumes 3 is also homogeneous.

In addition to homogenizing the velocity profile of the fumes 3, the body 401 of the distributing device 400 is designed to contribute to the gas-liquid transfer inside the scrubber 100.

To that end, as clearly shown in figure 1, the upper face 401A of the body 401 is inclined relative to the horizontal, such that the water from the rain P, once it has fallen on this upper face 401A of the body 401, streams over the latter while forming a water film F. It will be understood that the formation and streaming of the water film F result from the inclination of the upper face 401A of the body 401, as well as gravity. The film F covers the upper face 401A of the body 401, while at least partially covering the upper mouth of the perforations 402, as shown in figure 1. In practice, the upper mouth of the perforations 402 is provided to that end to be flush with the upper face 401A of the body 401. The water of the film F thus streams over the upper face 401A of the body 401, to a lower end edge 403 of the body 401 where the water is discharged from the body 401, as described in more detail hereinafter, then is removed from the scrubber 100, in particular from the bottom 101, while optionally being recycled to the liquid spreading device 300 in a manner not shown in figure 1.

Additionally, the invention provides that the water of the film F does not flow through the body 401 through the perforations 402, except, if applicable, for a marginal part of this water, which can be described as dripping and which is typically less than 10%, or even less than 5%. The water of the film F is prevented from flowing in the perforations 402 by flow of fumes in the perforations 402, as long as the velocity of this flow is high enough. This velocity of the fumes in the perforations 402 is thus provided to be greater than 5 m/s, preferably 8 m/s, or even preferably 10 m/s, but without exceeding 25 m/s, preferably 15 m/s, so as not to create too much pressure drop, when the fumes 2 and 3 flow at an average velocity of between 3 and 7 m/s. The aforementioned average velocity corresponds to the flow rate of the fumes 2 and 3, divided by the cross-section of the scrubber 100. At the upper face 401A of the body 401, the flow of the water film F is not calm, since this flow is of course disrupted by the upward passage of the fumes in the perforations 402. In particular, the meeting between the flow of the fumes leaving the perforations 402 and the water of the film F streaming over this upper face 401A generates jets J projected above the body 401 from the upper face 401A, as indicated schematically in figure 1: these jets J, which can also be seen as geysers and by which the contact between the fumes and the water is encouraged, contribute incrementally, but significantly, to the cleaning performances of the apparatus.

It will be noted that the body 401 thus behaves, to a certain extent, like a distillation tray, but that would operate beyond its flooding point: from the perspective of distillation, such a regime is unacceptable, since a re-entrainment of liquid upward by such jets would contaminate the plates from one to the next. In the case of the apparatus according to the invention, this has no impact, since the body 101 is in a single copy and re-entrainment of water by the jets J, which would propagate above a liquid spreading device 300, are acceptable, while if applicable being intercepted by a drop separator, arranged, in a manner not shown in the figures, at the apex 103 of the scrubber 100.

In practice, the velocity values stated above for the flow of fumes in the perforations 402 result from the sizing, in particular individual and collective, of these perforations 402. Thus, one skilled in the art can act on the individual sizing of the perforations 402, in particular on the equivalent diameter of the latter, defined as the ratio of four times the cross-section of the perforation to the perimeter of the latter: according to one preferred sizing, the equivalent diameter of each perforation 402 is between 50 and 120 mm, preferably between 60 and 80 mm, having noted that the geometry of the cross-section of the perforations is not limiting, for example being able to be round, rectangular or the like. One skilled in the art can also act on the joint sizing of the perforations 402, in particular on the empty level for the body 401, this empty level corresponding to the accumulation of the respective volumes of the perforations 402 with respect to the total volume of the body 401: according to a preferred sizing, this empty level is between 25 and 50%, preferably between 35 and 50%.

Furthermore, in order for the flow of fumes in the perforations 402 to reach the velocities set out above, the fumes 2 must actually supply the perforations 402, without bypassing the body 401, that is to say, without passing downstream from this body 401 other than after having passed through it through the perforations 402. In practice, various constructive possibilities are conceivable to avoid this bypass of the body 401 by the fumes 2 or at least by most of these fumes 2, the specificities of the corresponding arrangements therefore not being limiting with respect to the invention. According to one practical and advantageous embodiment, which is implemented in the exemplary embodiment of figures 1 and 2, the edge 403 of the body 401 is horizontally distant from a peripheral portion of the side wall 102 of the scrubber 100, while delimiting, between this peripheral portion and the edge 403, the passage 404 through which the water discharged from the upper face 401A of the body 401 flows downward. The body 401 thus covers the entire cross-section of the scrubber 100, aside from the passage 404. Subject to appropriate sizing of this passage 404, in particular by providing that the horizontal section of this passage 404 is small enough, the water discharged from the body 101 flows through this passage 404 while forming a curtain V that, as shown schematically in figure 1, covers the passage 404 with respect to the fumes 2. According to a preferred sizing of the passage 404, the horizontal section of the latter is equivalent to between 2% and 15% of the cross-section of the scrubber 100. In all cases, it will be understood that the water curtain V thus prevents the fumes 2 from bypassing the body 401 without having placed the fumes in contact with the water. In particular, all of the fumes 2, or if applicable, most of these fumes, that is to say, at least 90% by volume of the fumes 2, are forced to pass through the perforations 402, while if applicable, the balance of the fumes that passes through the passage 404 is placed in contact with the water from the curtain V and thus undergoes a corresponding cleaning.

Advantageously, the water curtain V flows toward the bottom 101 of the scrubber 100, while being passed through by the fumes 1 leaving the duct 200, subject to the appropriate positioning of the mouth of this duct 200: in the exemplary embodiment of figures 1 and 2, the mouth of the duct 200 and the passage 404 are thus located in a same peripheral portion of the side wall 102 of the scrubber 100. The scrubbing performances are thus strengthened owing to the additional gas-liquid transfer, resulting from the crossing of the water curtain V by the fumes 1.

Furthermore, in practice, the effects of the distributing device 400 are related to the thickness of the water film F, which can typically be between 3 and 50 mm. Since this thickness of the film F directly affects the pressure drop caused by the body 401, this thickness can be adjusted by one skilled in the art by acting on structural and operational parameters of the apparatus, in particular the flow rate of the fumes 1, the water flow rate spread by the liquid spreading device 300, the size of the perforations 402, the empty level of the body 401, the spacing between the perforations 402, the roughness of the upper face 401A of the body 401, etc. One of these parameters is the value of the inclination of the upper face 401A of the body 401. Thus, according to one advantageous arrangement of the distributing device 400, the inclination between the upper end and the lower end of the upper face 401A of the body 401 is between 3 and 15°: such an inclination value guarantees the satisfactory formation and flow of the water film F, without significantly increasing the total height of the scrubber 100.

In the embodiment of figures 1 and 2, the body 401 is made up of a single planar plate 410, the incline of which relative to the horizontal is advantageously between 3 and 15°: since the upper face 401A is made up of the upper face of this plate 410, the inclination of the latter imposes a constant inclination value for the upper face 401A, between 3 and 15°.

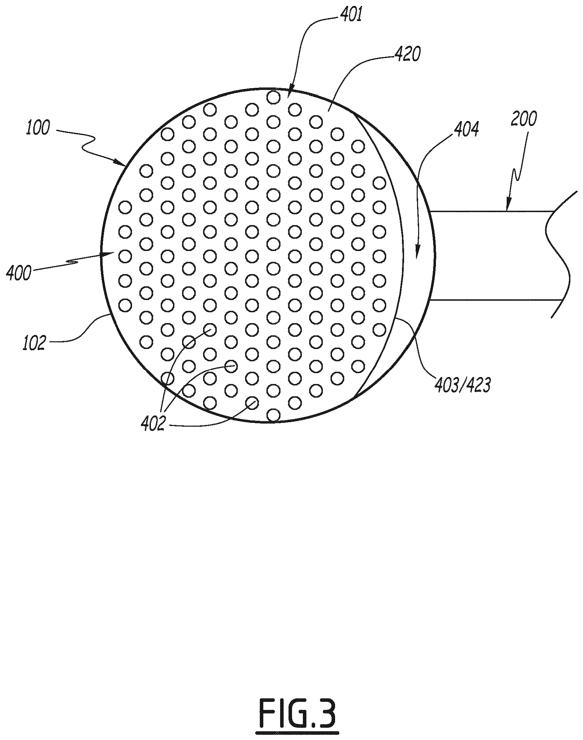

In the embodiment illustrated by figure 3, the planar plate 410 of the embodiment of figures 1 and 2 is replaced by a single planar plate 420 that differs from the plate 410 by the fact that, at the lower end edge 403 of the body 401, the plate 420 has a concave curved edge 423, instead of a straight edge 413 for the plate 410. This concave curved edge 423 gives the passage 404 a crescent-shaped horizontal section. Figure 3 thus illustrates the multiplicity of geometric shapes that the lower end edge 403 of the body 401 and the horizontal section of the passage 404 can have.

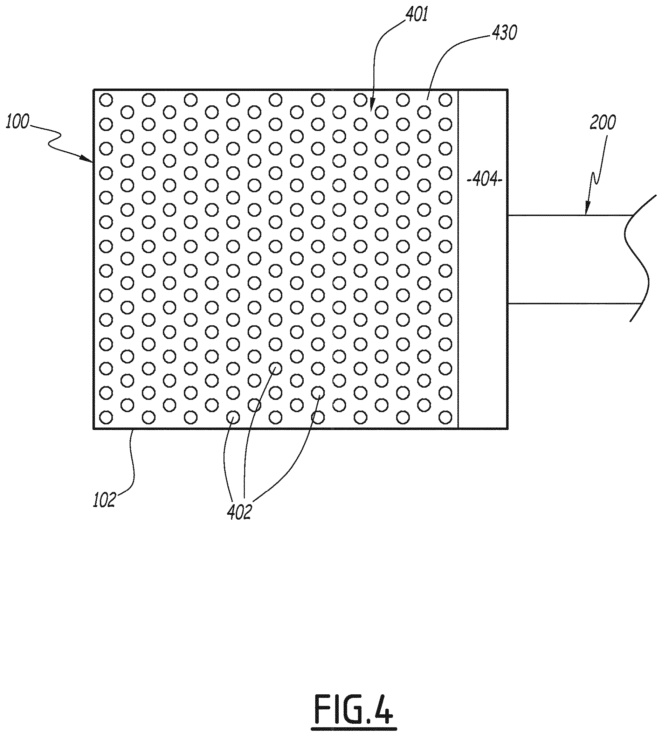

In the embodiment illustrated by figure 4, the plate 410 of the embodiment of figures 1 and 2 is replaced by a single planar plate 430 that differs from the plate 410 by the fact that its perimeter is adapted to a rectangular shape of the cross-section of the scrubber 100, unlike the perimeter of the plate 410, adapted to the circular shape of the cross-section of the scrubber. Figure 3 thus illustrates the fact that the invention is applicable to various geometric shapes for the cross-section of the scrubber 100.

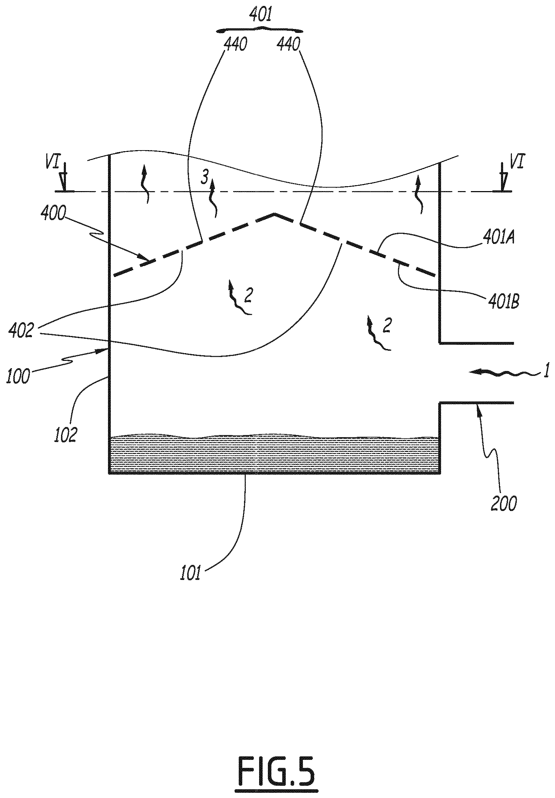

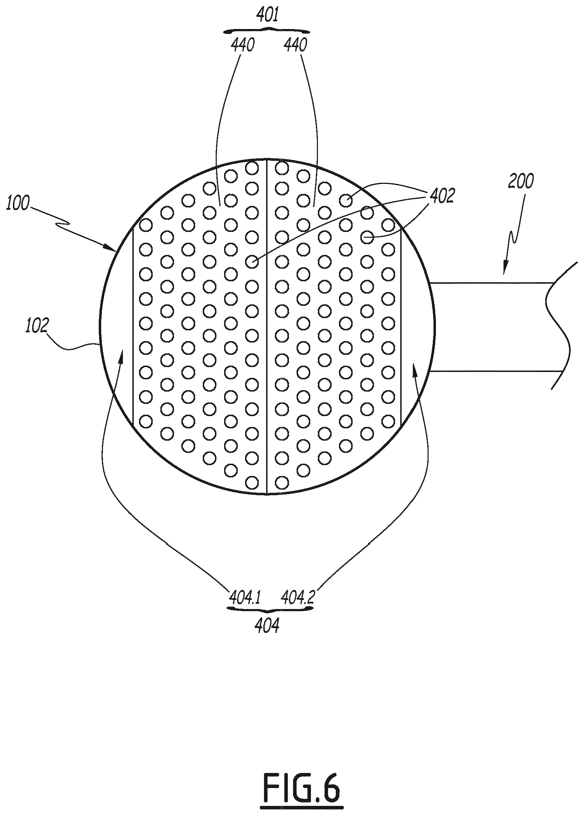

In the embodiment illustrated by figures 5 and 6, the planar plate 410 of the embodiment of figures 1 and 2 is replaced by two planar plates 440 arranged in an inverted "V". Each of these plates 440 has an inclination similar to that of the plate 410. Additionally, as clearly shown in figure 6, the passage 404 can then be divided into two sub-passages 404.1 and 404.2, respectively associated with the two plates 440. Figures 5 and 6 thus illustrate the multiplicity of the arrangements of planar plates in order to form the body 401.

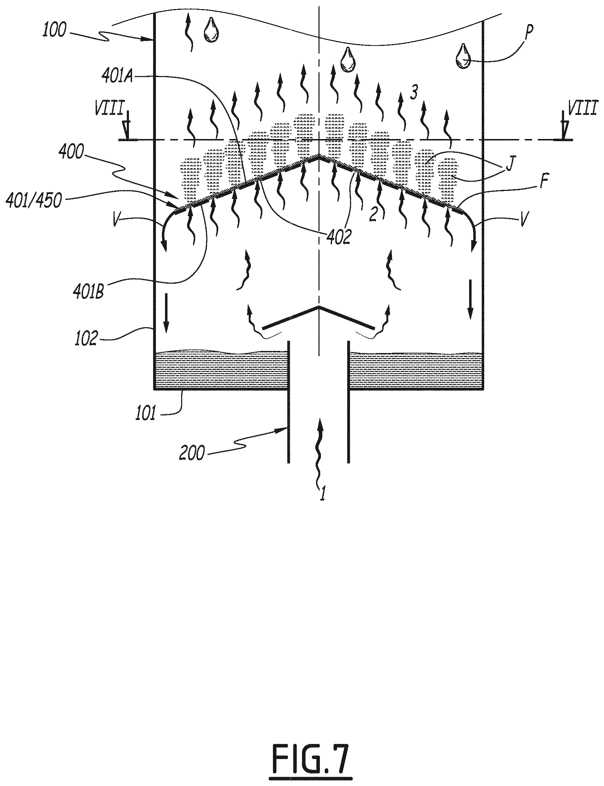

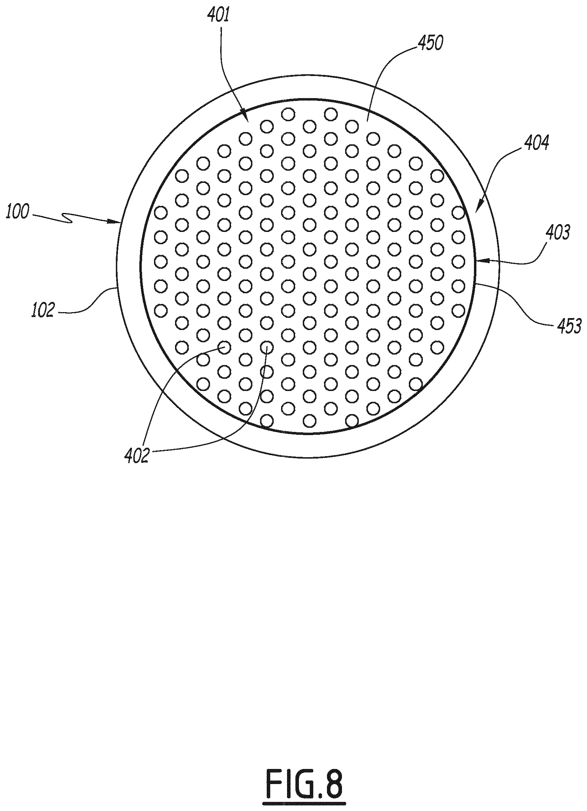

In the embodiment illustrated by figures 7 and 8, the planar plate 410 of the embodiment of figures 1 and 2 is replaced by a cone 450 pointing upward. The inclination of the upper face 401A of the body 401 formed by the cone 450 results from the conical shape of the latter and advantageously has a value similar to that considered above, by providing that the apical angle of the cone 450 is between 150° and 174°. Additionally, the lower end edge 403 of the body 401 is then formed by the edge 453 forming the base of the cone 450, having noted that this edge 453 runs over the entire inner periphery of the scrubber 100, while causing the passage 404 to extend over this entire periphery, as clearly shown in figure 8. Figures 7 and 8 thus illustrate a structural arrangement for the body 401 other than the structures with planar plates considered thus far.

Figures 7 and 8 also illustrate the application of the invention to an apparatus in which the fumes 1 brought through the duct 200 do not enter laterally the scrubber 100, but enter through the bottom 101 of the scrubber 100, the duct 200 then opening vertically in the bottom of the scrubber, as clearly shown in figure 7.

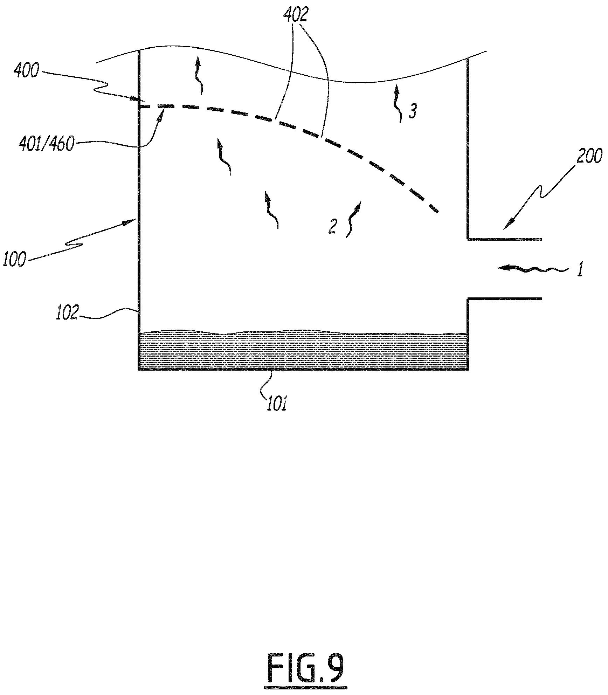

In the embodiment illustrated by figure 9, the planar plate 410 of the embodiment of figures 1 and 2 is replaced by a domed plate 460 that thus constitutes the body 401. This domed plate 460 is convex on the upper face 401A of the body 401 and is concave on the lower face 401B of the body 401.

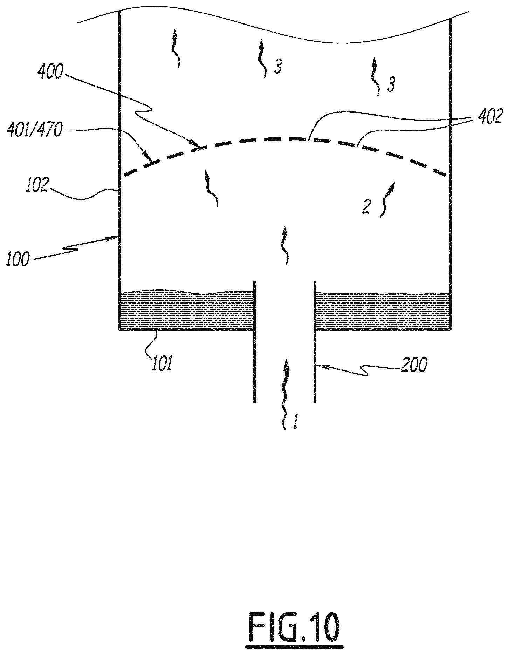

Likewise, in the embodiment illustrated by figure 10, the cone 450 of the embodiment of figures 7 and 8 is replaced by a domed plate 470 making up the body 401, while being convex on the upper face 401A and concave on the lower face 401B. The domed plate 470 is comparable to a dome.

In both cases, the convexity of the domed plates 460 and 470 causes the upper face 401A to be inclined relative to the horizontal in a variable manner. This convex geometry of the upper face 401 makes it possible to better distribute the flow of the water film on the upper face 401A of the body 401 and thus to better distribute the fumes over the section of the scrubber. Indeed, on a plate with fixed inclination, like the plates 410, 420, 430, 440 and 450, the water tends to accumulate with an accumulation gradient from the apex of the plate toward the lower end edge of the latter if one assumes that the rain P is spread uniformly over the entire section of the plate. All or part of the fumes flowing on the inner periphery of the scrubber then undergoes a greater pressure drop, resulting from increased thickness of the water film F near the lower end edge of the plate. The convex shape of the domed plates 460 and 470 makes it possible for the water film F to be less thin at the apex of the plates and to promote a faster flow of this water film toward the lower end edge of the plates in order to decrease the pressure drop effect at the periphery resulting from the presence of the water film.

The concavity of the domed plates 460 and 470 can be used to promote the distribution of the fumes 2 upstream from the body 401.

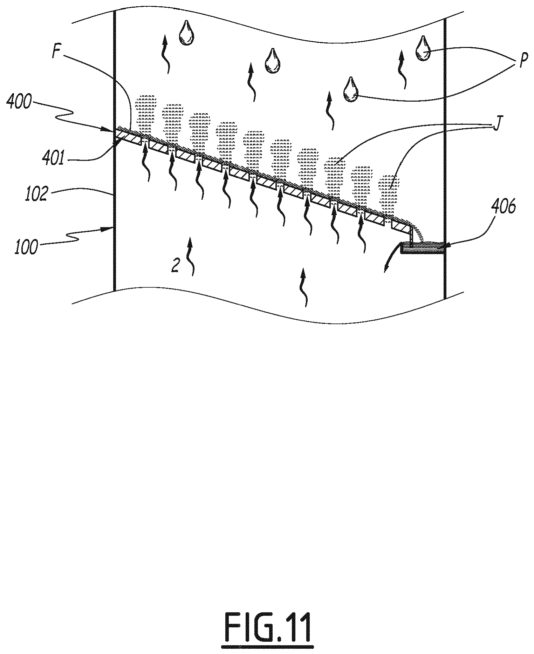

Figure 11 illustrates an arrangement of the distributing device 400 preventing the fumes 2 from bypassing the body 401, this arrangement being different from that illustrated in figures 1 and 2. The distributing device 400 of figure 11 to that end includes a hydraulic seal 406 that is supplied by the water discharged from the body 401 and that is sealed against the fumes 2. The principle of the hydraulic seal 406 is known in itself, for example being used in distillation: within the facility considered in figure 11, the lower end edge 403 of the body 401 is extended downward by a gradient that, at its lower part, is submerged in the water retained by a basin, the content of this basin making up the hydraulic seal 406. The water of this basin forms a hydraulic dam, sealed against the fumes 2, such that all of the fumes 2 are forced to pass through the perforations 402. In practice, the hydraulic seal 406 is sized to ensure a suitable discharge, with ad hoc discharge by an overflow. Furthermore, according to considerations similar to those relative to the curtain V described above, it is advantageously provided that the fumes 1 leaving the duct 200 have to pass through the overflow of the hydraulic seal 406 when they enter the scrubber 100.

## Claims

1. An apparatus for wet cleaning of exhaust fumes from an engine of a marine vessel, said apparatus comprising:
- a scrubber (100) at a lower part of which a duct (200) for intaking fumes (1) in the scrubber opens,
- a liquid spreading device (300), which is arranged inside the scrubber (100) and which is suitable for spreading water in the form of a rain (P) falling downward in the scrubber, and
- a distributing device (400), which is arranged inside the scrubber (100), while being located between the mouth of the duct (200) and the liquid spreading device (300), and which is housed in a free volume of the scrubber, delimited between the mouth of the duct and the liquid spreading device, the distributing device thus occupying a part of the free volume of the scrubber while the rest of this free volume is essentially empty,
wherein the distributing device (400) is suitable for distributing, substantially homogeneously over the cross-section of the scrubber (100), the fumes (3) flowing upward in the scrubber, and
wherein the distributing device (400) includes a body (401) that is provided with:
- an upper face (401A), on which the rain (P) falls and which is inclined relative to the horizontal such that the water of the rain (P), once the rain has fallen on the upper face of the body, streams there while forming a water film (F),
- a lower face (401B) that is reached by the fumes (2) rising in the scrubber (100) from the duct (200), and
- perforations (402), which connect the upper (401A) and lower (401B) faces of the body (401) to one another,
wherein the perforations (402) are provided such that their upper mouth is at least partially covered by the water film (F) covering the upper face (401A) of the body (401) and are dimensioned such that, when the average velocity of the fumes between the duct (200) and the distributing device (400) and between the distributing device (400) in the liquid spreading device (300) is between 3 and 7 m/s, the velocity of the fumes in the perforations is between 5 and 25 m/s, preferably between 10 and 15 m/s, such that:
(i) the flow of the fumes in the perforation prevents the water of the water film from flowing in the perforations, and
(ii) the meeting between the flow of the fumes leaving the perforations and the water of the water film streaming over the upper face of the body generates jets (J) sprayed above the body from the upper face of the body,
wherein the upper mouth of the perforations (402) is flush with the upper face (401A) of the body (401),
**characterized in that**:
- the inclination between the upper end and the lower end of the upper face (401A) of the body (401) is between 3 and 15°, and
- the perforations (402) jointly correspond to an empty level for the body (401), the empty level corresponding to the accumulation of the respective volumes of the perforations (402) with respect to the total volume of the body (401), the empty level being between 20 and 50%,
- the body (401) is provided with a lower end edge (403) up to which the water from the water film (F) streams over the upper face (401A) of the front body before being discharged from the body,
and **in that**:
- the lower end edge (403) of the body (401) is horizontally distant from at least a peripheral portion of the scrubber (100), delimiting a passage (404) between them through which the water discharged from the body flows while forming a curtain (V) that covers said passage (404) with respect to the fumes (2), the passage (404) having a horizontal section that is equal to between 2% and 15% of the cross-section of the scrubber (100), or
- the lower end edge (403) of the body (401) joins a hydraulic seal (406) of the distributing device (400), this hydraulic seal (406) being supplied by the water discharged from the body and being sealed against the fumes (2).

2. The apparatus according to claim 1, wherein the perforations (402) jointly correspond to an empty level for the body (401), the empty level corresponding to the accumulation of the respective volumes of the perforations (402) with respect to the total volume of the body (401), the empty level being between 35 and 50%.

3. The apparatus according to claim 1, wherein each perforation (402) has an equivalent diameter, defined as the ratio of four times the cross-section of the perforation to the perimeter of the perforation, that is between 50 and 120 mm.

4. The apparatus according to any one of claim 1 to 3, wherein, when the passage (404) is present, the duct (200) opens laterally in the scrubber (100), and wherein the mouth of the duct (200) and the passage (404) are located in a same peripheral portion of the side wall (102) of the scrubber (100) such that the fumes (1) leaving the duct pass through the curtain (V).

5. The apparatus according to any one of claims 1 to 3, wherein, when the hydraulic seal (406) is present, the duct (200) opens laterally in the scrubber (100), and wherein the mouth of the duct (200) is positioned such that the fumes (1) leaving the duct pass through an overflow of the hydraulic seal (406).

6. The apparatus according to any one of claims 1 to 3, wherein the duct (200) opens vertically in the bottom (101) of the scrubber (100).

7. The apparatus according to any one of claims 1 to 6, wherein the body (401) is made up of:
- either one or two planar plates (420; 430; 440), or
- a cone (450) pointing up.

8. The apparatus according to any one of claims 1 to 6, wherein the body (401) is made up of one or two domed plates (460; 470), which are convex on the upper face (401A) of the body and which are concave on the lower face (401B) of the body.

9. A method for wet cleaning exhaust fumes from an engine of a marine vessel, the method being implemented with the apparatus according to any one of claims 1 to 8, in which method:
- the exhaust fumes from an engine of a marine vessel enter a lower part of the scrubber (100) and flow upward inside the scrubber,
- the fumes flowing in the scrubber (100) are distributed substantially homogeneously over the cross-section of the scrubber by a distributing device (400), which is arranged inside the scrubber and which includes a body (401) provided with perforations (402) connecting to one another an upper face (401A) of the body, which is inclined relative to the horizontal, and a lower face (401B) of the body, which is reached by the fumes rising in the scrubber from the lower part of the scrubber,
- water is spread inside the scrubber (100) in the form of a rain (P), which falls downward in the scrubber onto the upper face (401A) of the body (401) and which, once the rain has fallen in the upper face of the body, streams there while forming a water film (F) covering the upper face of the body, including at least partially the upper mouth of the perforations (402) of the body, and
- the fumes flowing in the scrubber (100) flow in the perforations (402) of the body (401) with a velocity of between 5 and 25 m/s when the average velocity of these fumes upstream and downstream from the body is between 3 and 7 m/s, such that:
(i) the flow of the fumes in the perforations prevents the water of the water film (F) from flowing in the perforations, and
(ii) the meeting between the flow of the fumes leaving the perforations and the water of the water film streaming over the upper face (401A) of the body generates jets (J) sprayed above the body from the upper face of the body.

10. The method according to claim 9, wherein the velocity with which the fumes flow in the perforations (402) of the body (401), when the average velocity of the fumes upstream and downstream from the body is between 3 and 7 m/s, is between 8 and 15 m/s, preferably between 10 and 15 m/s.

## Patentansprüche

1. Vorrichtung zur Nassreinigung von Abgasen aus einem Motor eines Schiffs, die Vorrichtung umfassend:
- ein Wäscher (100), in dessen unterem Teil eine Leitung (200) zum Ansaugen von Rauch (1) in den Wäscher mündet,
- eine Flüssigkeitsausbreitungsvorrichtung (300), die im Inneren des Wäschers (100) angeordnet und geeignet ist, um Wasser in Form eines in dem Wäscher nach unten fallenden Regens (P) auszubreiten, und
- eine Verteilervorrichtung (400), die im Inneren des Wäschers (100) angeordnet ist, während sie sich zwischen der Mündung der Leitung (200) und der Flüssigkeitsausbreitungsvorrichtung (300) befindet, und die in einem freien Volumen des Wäschers untergebracht ist, das zwischen der Mündung der Leitung und der Flüssigkeitsausbreitungsvorrichtung begrenzt ist, wobei die Verteilervorrichtung somit einen Teil des freien Volumens des Wäschers einnimmt, während der Rest dieses freien Volumens im Wesentlichen leer ist,
wobei die Verteilervorrichtung (400) geeignet ist, um die in dem Wäscher aufwärts strömenden Dämpfe (3) im Wesentlichen homogen über den Querschnitt des Wäschers (100) zu verteilen, und
wobei die Verteilervorrichtung (400) einen Körper (401) beinhaltet, der mit Folgendem versehen ist:
- einer oberen Fläche (401A), auf die der Regen (P) fällt und die in Bezug auf die Horizontale geneigt ist, sodass das Wasser des Regens (P), nachdem der Regen auf die obere Fläche des Körpers gefallen ist, dort unter Bildung eines Wasserfilms (F) abströmt,
- einer untere Fläche (401B), die von den im Wäscher (100) aus der Leitung (200) aufsteigenden Dämpfen (2) erreicht wird, und
- Perforationen (402), die die obere (401A) und untere (401B) Fläche des Körpers (401) miteinander verbinden,
wobei die Perforationen (402) bereitgestellt sind, sodass ihre obere Mündung zumindest teilweise von dem Wasserfilm (F) bedeckt ist, der die obere Fläche (401A) des Körpers (401) überzieht, und dimensioniert sind, sodass, wenn die durchschnittliche Geschwindigkeit der Dämpfe zwischen der Leitung (200) und der Verteilervorrichtung (400) sowie zwischen der Verteilervorrichtung (400) und der Flüssigkeitsverteilungsvorrichtung (300) zwischen 3 und 7 m/s ist, die Geschwindigkeit der Dämpfe in den Perforationen zwischen 5 und 25 m/s, vorzugsweise zwischen 10 und 15 m/s, ist, sodass:
(i) die Strömung der Dämpfe in der Perforation verhindert, dass das Wasser des Wasserfilms in die Perforationen strömt, und
(ii) das Aufeinandertreffen des aus den Perforationen austretenden Dampfstroms mit dem Wasser des Wasserfilms, der über die oberen Fläche des Körpers strömt, Strahlen (J) entstehen, die von der oberen Fläche des Körpers nach oben gesprüht werden,
wobei die obere Öffnung der Perforationen (402) mit der oberen Fläche (401A) des Körpers (401) bündig ist,
**dadurch gekennzeichnet, dass**:
- die Neigung zwischen dem oberen Ende und dem unteren Ende der oberen Fläche (401A) des Körpers (401) zwischen 3° und 15° ist, und
- die Perforationen (402) gemeinsam einem Leerraum für den Körper (401) entsprechen, wobei der Leerraum der Summe der Volumina der Perforationen (402) im Verhältnis zu dem Gesamtvolumen des Körpers (401) entspricht und der Leerraum zwischen 20 und 50 % ist,
- der Körper (401) mit einem unteren Endrand (403) versehen ist, bis zu dem das Wasser aus dem Wasserfilm (F) über die obere Fläche (401A) des vorderen Körpers strömt, bevor es aus dem Körper ausgegeben wird,
und dass:
- der untere Endrand (403) des Körpers (401) horizontal von mindestens einem peripheren Abschnitt des Wäschers (100) beabstandet ist und dazwischen einen Durchgang (404) begrenzt, durch den das aus dem Körper ausgegebene Wasser strömt, indem es einen Vorhang (V) bildet, der den Durchgang (404) in Bezug auf die Dämpfe (2) abdeckt, wobei der Durchgang (404) einen horizontalen Querschnitt aufweist, der zwischen 2 % und 15 % des Querschnitts des Wäschers (100) ist,
oder
- der untere Endrand (403) des Körpers (401) mit einer hydraulischen Dichtung (406) der Verteilervorrichtung (400) verbunden ist, wobei diese hydraulische Dichtung (406) durch das von dem Körper abgegebene Wasser versorgt wird und gegen die Dämpfe (2) abgedichtet ist.

2. Vorrichtung nach Anspruch 1, wobei die Perforationen (402) gemeinsam einen Leerraum für den Körpers (401) bilden, wobei der Leerraum der Summe der Volumina der Perforationen (402) im Verhältnis zu dem Gesamtvolumen des Körpers (401) entspricht und der Leerraum zwischen 35 und 50 % ist.

3. Vorrichtung nach Anspruch 1, wobei jede Perforation (402) einen äquivalenten Durchmesser aufweist, der als das Verhältnis das Vierfache der Querschnittsfläche der Perforation zum Umfang der Perforation definiert ist und zwischen 50 und 120 mm liegt.

4. Vorrichtung nach einem der Ansprüche 1 bis 3, wobei, wenn der Durchgang (404) vorhanden ist, der Kanal (200) seitlich in den Wäscher (100) öffnet, und wobei sich die Mündung des Kanals (200) und der Durchgang (404) in demselben Umfangsabschnitt der Seitenwand (102) des Wäschers (100) befinden, sodass die Dämpfe (1), die aus der Leitung austreten, durch den Vorhang (V) verlaufen.

5. Vorrichtung nach einem der Ansprüche 1 bis 3, wobei bei Vorhandensein der Hydraulikdichtung (406) die Leitung (200) seitlich in den Wäscher (100) mündet, und wobei die Mündung der Leitung (200) positioniert ist, sodass die Dämpfe (1), die aus der Leitung austreten, durch einen Überlauf der Hydraulikdichtung (406) verlaufen.

6. Vorrichtung gemäß einem der Ansprüche 1 bis 3, wobei die Leitung (200) vertikal in den Boden (101) des Wäschers (100) mündet.

7. Vorrichtung nach einem der Ansprüche 1 bis 6, wobei der Körper (401) aus Folgendem besteht:
- entweder einer oder zwei ebenen Platten (420; 430; 440), oder
- einem Kegel (450), der nach oben weist.

8. Vorrichtung nach einem der Ansprüche 1 bis 6, wobei der Körper (401) aus einer oder zwei gewölbten Platten (460; 470) besteht, die an der oberen Fläche (401A) des Körpers konvex und an der unteren Fläche (401B) des Körpers konkav sind.

9. Verfahren zur Nassreinigung von Abgasen aus einem Motor eines Schiffs, wobei das Verfahren mit der Vorrichtung nach einem der Ansprüche 1 bis 8 implementiert wird, wobei in dem Verfahren:
- die Abgase eines Motors eines Schiffs in einen unteren Teil des Wäschers (100) eintreten und innerhalb des Wäschers nach oben strömen,
- die in den Wäscher (100) strömenden Dämpfe werden durch eine Verteilervorrichtung (400), die im Inneren des Wäschers angeordnet ist und einen Körper (401) umfasst, der mit Perforationen (402) versehen ist, welche eine obere Fläche (401 A) des Körpers, die gegenüber der Horizontalen geneigt ist, und eine untere Fläche (401B) des Körpers, die von den Dämpfen erreicht wird, die aus dem unteren Teil in den Wäscher aufsteigen, miteinander verbinden, im Wesentlichen gleichförmig über den Querschnitt des Wäschers verteilt,
- sich Wasser im Inneren des Wäschers (100) in Form eines Regens (P) ausbreitet, der im Wäschers nach unten auf die obere Fläche (401A) des Körpers (401) fällt und, sobald der Regen auf der Oberseite des Körpers gefallen ist, dort strömt und dabei einen Wasserfilm (F) bildet, der die obere Fläche des Körpers bedeckt, einschließlich zumindest teilweise der oberen Öffnung der Perforationen (402) des Körpers, und
- die im Wäscher (100) strömenden Dämpfe in den Perforationen (402) des Körpers (401) mit einer Geschwindigkeit zwischen 5 und 25 m/s strömen, wenn die durchschnittliche Geschwindigkeit dieser Dämpfe stromaufwärts und stromabwärts des Körpers zwischen 3 und 7 m/s ist, sodass:
(i) die Strömung der Dämpfe in den Perforationen verhindert, dass das Wasser des Wasserfilms (F) in die Perforationen strömt, und
(ii) das Aufeinandertreffen des aus den Perforationen austretenden Dampfstroms mit dem Wasser des Wasserfilms, der über die oberen Fläche (401A) des Körpers strömt, Strahlen (J) entstehen, die von der oberen Fläche des Körpers nach oben gesprüht werden.

10. Verfahren nach Anspruch 9, wobei die Geschwindigkeit, mit der die Dämpfe in den Perforationen (402) des Körpers (401) strömen, wenn die Durchschnittsgeschwindigkeit der Dämpfe stromaufwärts und stromabwärts von dem Körper zwischen 3 und 7 m/s ist, zwischen 8 und 15 m/s, vorzugsweise zwischen 10 und 15 m/s, ist.

## Revendications

1. Installation d'épuration par voie humide de fumées d'échappement d'un moteur d'un navire marin, laquelle installation comprend :
- un laveur (100) à la base duquel débouche un conduit (200) d'admission de fumées (1) dans le laveur,
- un dispositif de distribution (300), qui est agencé à l'intérieur du laveur (100) et qui est adapté pour distribuer de l'eau sous forme d'une pluie (P) tombant vers le bas dans le laveur, et
- un dispositif de répartition (400), qui est agencé à l'intérieur du laveur (100), en étant situé entre le débouché du conduit (200) et le dispositif de distribution (300), et qui est logé dans un volume libre du laveur, délimité entre le débouché du conduit et le dispositif de distribution, le dispositif de répartition occupant ainsi une partie du volume libre du laveur tandis que le reste de ce volume libre est essentiellement vide,
lequel dispositif de répartition est adapté pour répartir de manière sensiblement homogène sur la section transversale du laveur les fumées (3) circulant de manière ascendante dans le laveur, et
lequel dispositif de répartition (400) comporte un corps (401) qui est pourvu :
- d'une face supérieure (401A), sur laquelle la pluie (P) tombe et qui est inclinée par rapport à l'horizontale de sorte que l'eau de la pluie (P), une fois tombée sur la face supérieure du corps, y ruisselle en formant un film d'eau (F),
- d'une face inférieure (401B) qu'atteignent les fumées (2) montant dans le laveur (100) depuis le conduit (200), et
- de perforations (402), qui relient l'une à l'autre les faces supérieure (401A) et inférieure (401B) du corps (401),
dans laquelle les perforations (402) sont prévues pour que leur débouché supérieur soit au moins partiellement recouvert par le film d'eau (F) recouvrant la face supérieure (401A) du corps (401) et sont dimensionnées de façon que, lorsque la vitesse moyenne des fumées entre le conduit (200) et le dispositif de répartition (400) et entre le dispositif de répartition (400) et le dispositif de distribution (300) est comprise entre 3 et 7 m/s, la vitesse des fumées dans les perforations est comprise entre 5 et 25 m/s, de préférence entre 10 et 15 m/s, de sorte que :
(i) l'écoulement des fumées dans les perforations empêche l'eau du film d'eau de s'écouler dans les perforations et
(ii) la rencontre entre l'écoulement des fumées sortant des perforations et l'eau du film d'eau ruisselant sur la face supérieure du corps génère des jets (J) projetés au-dessus du corps depuis la face supérieure du corps
dans laquelle le débouché supérieur des perforations (402) affleure la face supérieure (401A) du corps (401),
**caractérisé en ce que** :
- l'inclinaison entre l'extrémité supérieure et l'extrémité inférieure de la face supérieure (401A) du corps (401) est comprise entre 3 et 15°, et
- les perforations (402) correspondent conjointement à un taux de vide pour le corps (401), le taux de vide correspondant au cumul des volumes respectifs des perforations (402) vis-à-vis du volume total du corps (401), le taux de vide étant compris entre 20 et 50%,
et **en ce que** :
- le bord d'extrémité inférieure (403) du corps (401) est horizontalement distant d'au moins une portion périphérique du laveur (100), en délimitant entre eux un passage (404) par lequel l'eau évacuée du corps s'écoule en formant un voile (V) qui couvre ledit passage (404) vis-à-vis des fumées (2), le passage (404) présentant une section horizontale qui vaut entre 2% et 15% de la section transversale du laveur (100),
ou
- le bord d'extrémité inférieure (403) du corps (401) rejoint un joint hydraulique (406) du dispositif de répartition (400), ce joint hydraulique (406) étant alimenté par l'eau évacuée du corps et étant étanche aux fumées (2).

2. Installation suivant la revendication 1, dans laquelle les perforations (402) correspondent conjointement à un taux de vide pour le corps (401), le taux de vide correspondant au cumul des volumes respectifs des perforations (402) vis-à-vis du volume total du corps (401), le taux de vide étant compris entre 35 et 50%.

3. Installation suivant la revendication 1, dans laquelle chaque perforation (402) présente un diamètre équivalent, défini comme le rapport de quatre fois la section transversale de la perforation sur le périmètre de la perforation, qui est compris entre 50 et 120 mm.

4. Installation suivant l'une quelconque des revendications 1 à 3, dans laquelle, lorsque le passage (404) est présent, le conduit (200) débouche latéralement dans le laveur (100), et dans laquelle le débouché du conduit (200) est positionné de manière que les fumées (1) sortant du conduit traversent le voile (V).

5. Installation suivant l'une quelconque des revendications 1 à 3, dans laquelle, lorsque le joint hydraulique (406) est présent, le conduit (200) débouche latéralement dans le laveur (100), et dans laquelle le débouché du conduit (200) est positionné de manière que les fumées (1) sortant du conduit traversent un trop-plein du joint hydraulique (406).

6. Installation suivant l'une quelconque des revendications 1 à 3, dans laquelle le conduit (200) débouche verticalement dans le fond (101) du laveur (100).

7. Installation suivant l'une quelconque des revendications 1 à 6, dans laquelle le corps (401) est constitué :
- soit d'une ou de deux plaques planes (420 ; 430 ; 440),
- soit d'un cône (450) pointant vers le haut.

8. Installation suivant l'une quelconque des revendications 1 à 6, dans laquelle le corps (401) est constitué d'une ou de deux plaques bombées (460 ; 470), qui sont convexes sur la face supérieure (401A) du corps et qui sont concaves sur la face inférieure (401B) du corps.

9. Procédé d'épuration par voie humide de fumées d'échappement d'un moteur d'un navire marin, le procédé étant mis en œuvre avec l'installation selon l'une quelconque des revendications 1 à 8, procédé dans lequel :
- les fumées d'échappement d'un moteur d'un navire marin sont admises à la base d'un laveur (100) et circulent de manière ascendante à l'intérieur du laveur,
- les fumées circulant dans le laveur (100) sont réparties de manière sensiblement homogène sur la section transversale du laveur par un dispositif de répartition (400), qui est agencé à l'intérieur du laveur et qui comporte un corps (401) pourvu de perforations (402) reliant l'une à l'autre une face supérieure (401A) du corps, qui est inclinée par rapport à l'horizontale, et une face inférieure (401B) du corps, qu'atteignent les fumées montant dans le laveur depuis la base du laveur,
- de l'eau est distribuée à l'intérieur du laveur (100) sous forme d'une pluie (P), qui tombe vers le bas du laveur jusque sur la face supérieure (401A) du corps (401) et qui, une fois tombée sur la face supérieure du corps, y ruisselle en formant un film d'eau (F) recouvrant la face supérieure du corps, y compris au moins partiellement le débouché supérieur des perforations (402) du corps, et
- les fumées circulant dans le laveur (100) s'écoulent dans les perforations (402) du corps (401) avec une vitesse comprise entre 5 et 25 m/s lorsque la vitesse moyenne de ces fumées en amont et en aval du corps est comprise entre 3 et 7 m/s, de sorte que l'écoulement des fumées dans les perforations empêche l'eau du film d'eau (F) de s'écouler dans les perforations et que la rencontre entre l'écoulement des fumées sortant des perforations et l'eau du film d'eau ruisselant sur la face supérieure (401A) du corps génère des jets (J) projetés au-dessus du corps depuis la face supérieure du corps.

10. Procédé suivant la revendication 9, dans lequel la vitesse avec laquelle les fumées s'écoulent dans les perforations (402) du corps (401) lorsque la vitesse moyenne des fumées en amont et en aval du corps est comprise entre 3 et 7 m/s, est comprise entre 8 et 15 m/s, de préférence entre 10 et 15 m/s.
